# EUROPEAN PATENT APPLICATION

(11) **EP 1 847 803 A2**
(43) Date of publication of application: **24.10.2007**
(21) Application number: 07106276.4
(22) Date of filing: 16.04.2007
(51) Int. Cl.: G01C 19/56

(54) **Angular velocity sensor**

(30) Priority: 19.04.2006 JP 2006116001
(71) Applicant: Fujitsu Media Devices Limited, Yokohama-shi, Kanagawa 222-0033 (JP); FUJITSU LIMITED, Kawasaki-shi, Kanagawa 211-8588 (JP)
(72) Inventor: Yamaji, Takayuki, Yokohama-shi, Kanagawa 222-0033 (JP); Ishikawa, Hiroshi, Kawasaki-shi Kanagawa 211-8588 (JP); Imai, Akira, Sannohe-gun, Aomori 039-0811 (JP); Ogasawara, Shoji, Sannohe-gun, Aomori 039-0811 (JP); Katsuki, Takashi, Kawasaki-shi Kanagawa 211-8588 (JP); Takahashi, Yuji, Kawasaki-shi Kanagawa 211-8588 (JP); Nakazawa, Fumihiko, Kawasaki-shi Kanagawa 211-8588 (JP); Takagi, Hiroaki, Yokohama-shi, Kanagawa 222-0033 (JP)
(74) Representative: Hitching, Peter Matthew

(57) **Abstract**

An angular velocity sensor includes multiple tuning-fork vibrators (10a, b), each of which respectively includes a base portion and multiple arm portions extending from the base portion, and a difference in length of the arm portions between the multiple tuning-fork vibrators is at least 1 percent of an average of lengths of the multiple arm portions of the multiple tuning-fork vibrators.

## Description

### BACKGROUND OF THE INVENTION

### 1. Field of the Invention

This invention generally relates to angular velocity sensors, and more particularly, to an angular velocity sensor having multiple tuning-fork vibrators.

### 2. Description of the Related Art

Angular velocity sensors detect an angular velocity at rotation, and are utilized for avoidance of blurring of images due to hand movement, systems such as car navigation systems, automobiles, attitude control systems of robots, and the like. Japanese Patent Application Publication No. 9-292229 (hereinafter, referred to as Document 1) discloses an angular velocity sensor equipped with multiple column-shaped vibrators. Japanese Patent No. 3418245 (hereinafter, referred to as Document 2) discloses an angular velocity sensor detecting multiple axes and supporting a column-shaped vibrator with two points. The aforementioned column-shaped or rod-like vibrator is called tuning-bar vibrator. Also, International Publication No. WO 03/100350 (hereinafter, referred to as Document 3) discloses a tuning-fork vibrator having a base portion and multiple arm portions extending from the base portion.

The tuning-bar vibrator cannot redress the balance of vibration against an external vibration to cancel the vibration. For this reason, if two tuning-bar vibrators are arranged in one package as described in Document 1 and Document 2, an unnecessary vibration (leakage vibration) caused by the external vibration in each tuning-bar vibrator will interfere with each other (interference noise), and will degrade the detection accuracy of the angular velocity. In addition, the tuning-bar vibrators have a narrow unmoved area in the natural vibration frequency. If an area other than the unmoved area is supported in each tuning-bar vibrator, the drive vibration of one of the tuning-bar vibrators will be propagated to the other tuning-bar vibrator, the interference noise will be generated and the detection accuracy of the angular velocity will be degraded. Further, since the whole tuning-bar vibrator vibrates, it is necessary to support the tuning-bar vibrator with two points. Therefore, it is difficult to maintain the position accuracy or balance of the two supporting portions.

Meanwhile, the tuning-fork vibrator has a configuration in which left and right arm portions cancel the external vibration. This can prevent the degradation of the detection accuracy of the angular velocity and the interference noise in an angular velocity sensor having multiple tuning-fork vibrators. Nevertheless, even in the angular velocity sensor having multiple tuning-fork vibrators, the suppression of the interference noise is not enough.

### SUMMARY OF THE INVENTION

The present invention has been made in view of the above circumstances and provides an angular velocity sensor that can reduce an interference noise between multiple tuning-fork vibrators.

According to one aspect of the present invention, there is provided an angular velocity sensor including multiple tuning-fork vibrators, each of which respectively includes a base portion and multiple arm portions extending from the base portion, and a difference in length of the arm portions between the multiple tuning-fork vibrators is at least 1 percent of an average of lengths of the arm portions of the multiple tuning-fork vibrators. It is therefore possible to reduce the interference noise between the multiple tuning-fork vibrators.

### BRIEF DESCRIPTION OF THE DRAWINGS

Exemplary embodiments of the present invention will be described in detail with reference to the following drawings, wherein:
FIG. 1 is a perspective view of an angular velocity sensor employed in a first exemplary embodiment of the present invention;
FIG. 2A is a top view of the angular velocity sensor employed in the first exemplary embodiment of the present invention;
FIG. 2B is a perspective view of a tuning-fork vibrator and a supporting portion in the angular velocity sensor employed in the first exemplary embodiment of the present invention;
FIG. 3A and FIG. 3B are views showing electrode patterns on the surfaces of the tuning-fork vibrator;
FIG. 4A and FIG. 4B are views showing vibration modes of the tuning-fork vibrator;
FIG. 5 is a graph showing interference noise with respect to differences between resonance frequencies of two tuning-fork vibrators;
FIG. 6A and FIG. 6B are perspective views of an angular velocity sensor employed in a second exemplary embodiment of the present invention;
FIG. 7A and FIG. 7B are views explaining an angular velocity sensor employed in a third exemplary embodiment of the present invention;
FIG. 8A and FIG. 8B are views of a supporting portion in an angular velocity sensor employed in a fourth exemplary embodiment of the present invention;
FIG. 9A through FIG. 9D are views showing results of thermal shock tests performed on the angular velocity sensors employed in the first through fourth exemplary embodiments of the present invention;
FIG. 10A through FIG. 10C are views of a supporting portion in an angular velocity sensor employed in a fifth exemplary embodiment of the present invention;
FIG. 11A through FIG. 11D are views of a supporting portion in an angular velocity sensor employed in a sixth exemplary embodiment of the present invention;
FIG. 12A through FIG. 12C are views of a supporting portion in an angular velocity sensor employed in a seventh exemplary embodiment of the present invention;
FIG. 13 is a view showing a tuning-fork vibrator in an angular velocity sensor employed in an eighth exemplary embodiment of the present invention; and
FIG. 14A through FIG. 14C are views of a supporting portion in an angular velocity sensor employed in the eighth exemplary embodiment of the present invention.

### DESCRIPTION OF THE PREFERRED EMBODIMENTS

A description will now be given, with reference to the accompanying drawings, of exemplary embodiments of the present invention.

### (First Exemplary Embodiment)

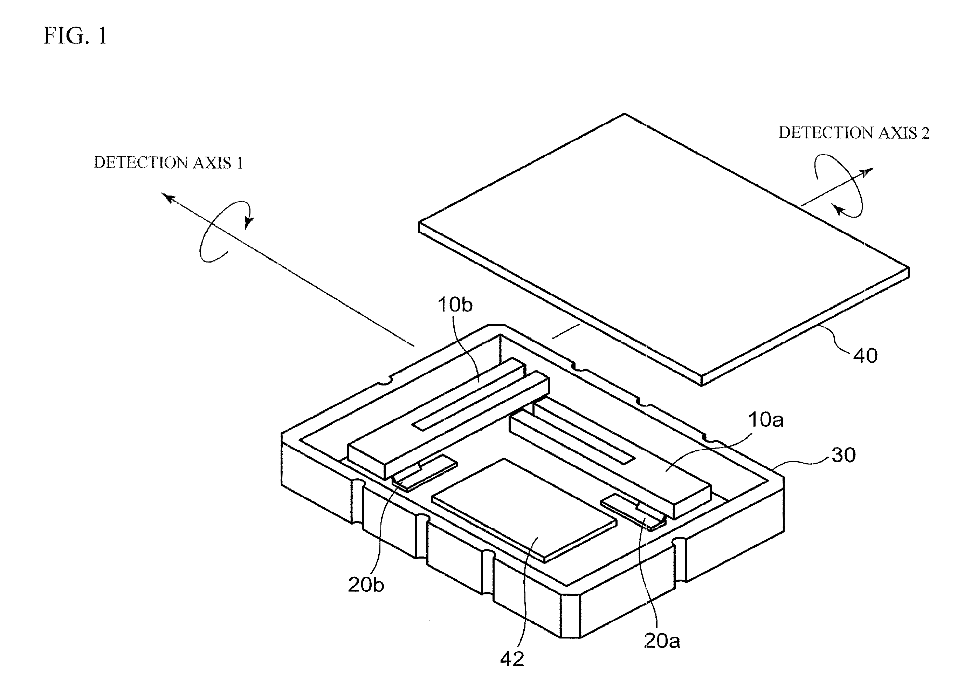

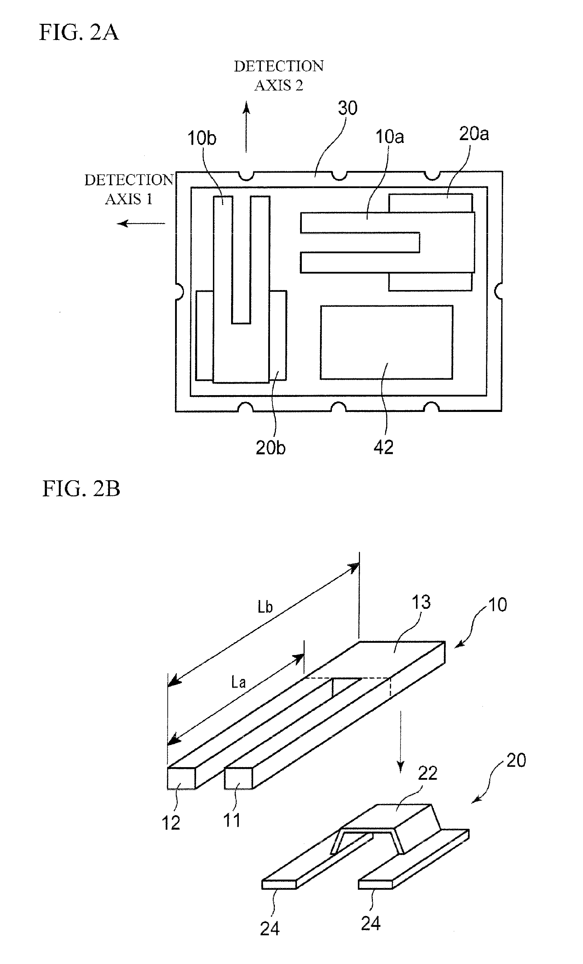

A first exemplary embodiment is an example of an angular velocity sensor in which two tuning-fork vibrators are mounted in a package serving as a mounting portion. FIG. 1 is a perspective view of an angular velocity sensor employed in a first exemplary embodiment of the present invention. FIG. 2A is a top view of the angular velocity sensor employed in the first exemplary embodiment of the present invention (although a cap thereof is not shown). FIG. 2B is a perspective view of a tuning-fork vibrator 10 and a supporting portion 20 in the angular velocity sensor employed in the first exemplary embodiment of the present invention. Referring to FIG. 1 and FIG. 2A, tuning-fork vibrators 10a and 10b respectively having two arm portions are respectively secured and mounted through supporting portions 20a and 20b in a cavity type package 30. The tuning-fork vibrators 10a and 10b are substantially perpendicular to each other, and respectively detect angular velocities centering around a detection axis 1 and a detection axis 2, whereas the detection axis 1 and the detection axis 2 are respectively configured along a longitudinal direction (direction that the arm portions extend) of the tuning-fork vibrators 10a and 10b. The package 30 may include, for example, a control circuit 42 in which electronic parts are mounted in a substrate. The control circuit 42 controls the tuning-fork vibrators 10a and 10b, applies a drive signal to the tuning-fork vibrators 10a and 10b respectively, and is fed with a detection signal respectively by the tuning-fork vibrators 10a and 10b. A cap 40 serves as a lid for the package 30.

Referring to FIG. 2B, each of the tuning-fork vibrators 10a and 10b includes: a base portion 13; and two (multiple) arm portions 11 and 12 extending from the base portion 13. Herein, each of the tuning-fork vibrators 10a and 10b refers to the tuning-fork vibrator 10, and each of the supporting portions 20a and 20b refers to the supporting portion 20. The supporting portion 20 for supporting the tuning-fork vibrator 10 includes: a supporting face 22 for supporting the tuning-fork vibrator 10; and mounting faces 24 for mounting the tuning-fork vibrator 10 in the package 30. Herein, the length of the tuning-fork vibrator 10 is referred to as Lb, and the length of the arm portions 11 and 12 is referred to as La. The tuning-fork vibrator 10 is firmly fixed to the supporting face 22 by a bonding member, for example, adhesive or the like. Each of the mounting faces 24 of the supporting portion 20 is firmly fixed to the package 30 by a bonding member, for example, adhesive or the like. An adhesive such as epoxy resin or the like may be used. Also, in addition to the adhesive, low-melting glass or solder such as lead-free solder or Au-Sn solder may be used as the bonding member.

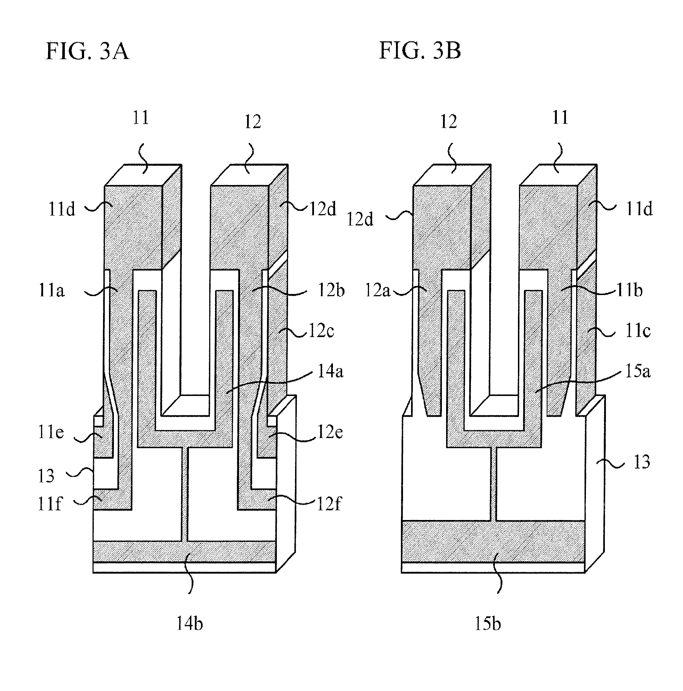

FIG. 3A and FIG. 3B show electrode patterns of the tuning-fork vibrator 10. The tuning-fork vibrator 10 may be made, for example, of a piezoelectric material such as LiNbO₃ (lithium niobate), LiTaO₃ (lithium tantalate), or the like. For example, if LiNbO₃ (lithium niobate) or LiTaO₃ (lithium tantalate) is employed, a high k 23 electromechanical coupling coefficient is obtainable by using a Y-plate ranging from 130° to 140°. There are formed electrodes of metal films such as Au (gold), Al (aluminum), or Cu (copper) on the surface of the tuning-fork vibrator 10.

FIG. 3A shows a front side of the tuning-fork vibrator 10, and FIG. 3B shows a rear side thereof. There are provided detection electrodes 11a, 11b, and 11c, at the arm portion 11. The detection electrode 11a and the detection electrode 11b are coupled by an electrode 11d. An extraction electrode 11f is provided to the detection electrode 11a. The detection electrode 11c is connected to an extraction electrode 11e. In a similar manner, there are provided detection electrodes 12a, 12b, and 12c, at the arm portion 12. The detection electrode 12a and the detection electrode 12b are coupled by an electrode 12d. An extraction electrode 12f is provided to the detection electrode 12a. The detection electrode 12c is connected to an extraction electrode 12e. A drive electrode 14a is provided at the front side of the tuning-fork vibrator 10, and is connected to an extraction electrode 14b. In a similar manner, a drive electrode 15a is provided at the rear side of the tuning-fork vibrator 10, and is connected to an extraction electrode 15b.

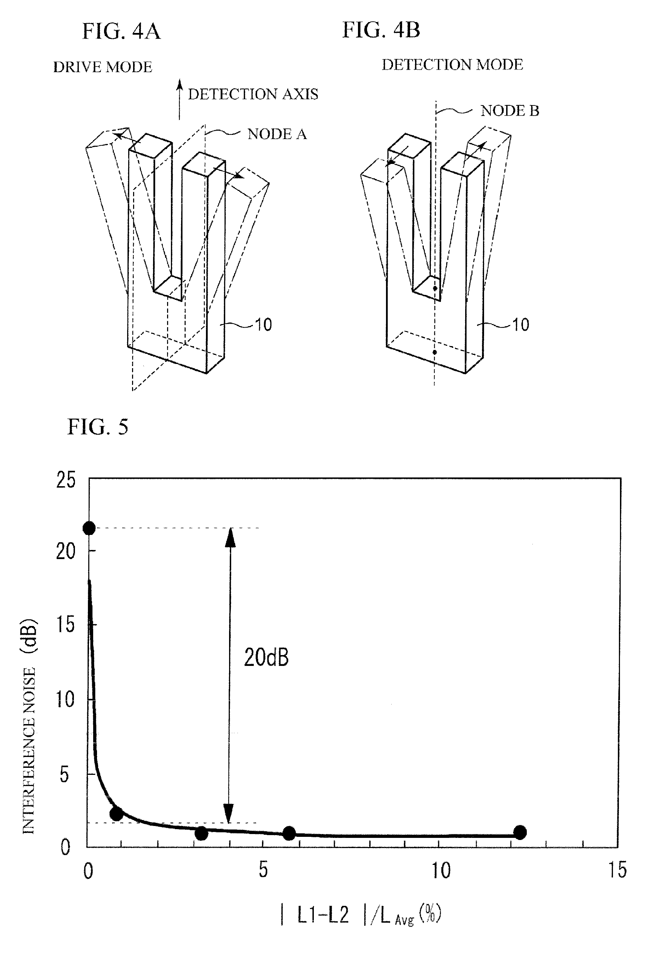

FIG. 4A and FIG. 4B are views explaining a drive mode and a detection mode of the tuning-fork vibrator 10. Referring to FIG. 4A, a drive signal is so fed to the drive electrode 14a and the drive electrode 15a of the tuning-fork vibrator 10 as to generate a vibration mode in which the arm portions 11 and 12 open and close. This vibration is parallel to a plane arranged in the direction of the arm portions 11 and 12, and is called in-plane vibration mode. Here, if an angular velocity is applied to the detection axis, there will be generated another vibration mode in which the arm portions 11 and 12 vibrate back and forth as shown in FIG. 4B due to Coriolis force. This vibration is a twist vibration perpendicular to a plane arranged in the direction of the arm portions 11 and 12, and is called plane-vertical vibration mode. The angular velocity around the detection axis can be detected by detecting the vibration mode with the detection electrodes 11a through 11c and the detection electrodes 12a through 12c. The drive mode refers to a vibration mode used for drive, and the detection mode refers to a vibration mode used for detection. The drive mode and the detection mode are not limited to the vibration modes shown in FIG. 4A or FIG. 4B. It is only necessary that the detection mode be generated by Coriolis force in the drive mode. In each of the vibration modes, node refers to non-vibrating region. In FIG. 4A, the node A corresponds to a plane of symmetry in the tuning-fork vibrator 10. In FIG. 4B, the node B corresponds to a central axis of the tuning-fork vibrator 10.

Next, calculations were made for interference noise (leakage vibration) of an angular velocity sensor having the tuning-fork vibrator 10 configured as shown in FIG. 1 and another angular velocity sensor having a tuning-bar vibrator made up of a square pole instead of the tuning-fork vibrator 10. Herein, if two vibrators are mounted in an identical package and a voltage of natural vibration frequency is supplied to one of the vibrators to excite a drive vibration and the interference causes the other vibrator to generate a vibration, the interference noise refers to a result of the displacement component of the generated vibration normalized by the displacement component of the drive vibration. As a result, the interference noise of the angular velocity sensor having the tuning-fork vibrator 10 is approximately 20 % of that of the angular velocity sensor having the tuning-bar vibrator.

FIG. 5 shows the relationship between |L1 - L2| / L_{AVG} and the interference noise. Herein, |L1 - L2| that is a difference in the length La of the arm portions between the tuning-fork vibrator 10a and that of the tuning-fork vibrator 10b is normalized by the average L_{AVG} of the lengths La of the tuning-fork vibrators 10a and 10b. Black circles represent measurements, and dotted lines represent calculations. If the interference noise is aimed to be reduced to 1/10, namely, reduced by 20 dB from the case where |L1 - L2| that is the difference in the arm portion length La is 0, 1 % or more of |L1 - L2| / L_{AVG} will be able to reduce the interference noise by approximately 20 dB or more from the case where |L1 - L2| that is the difference in the resonance frequency is 0. In addition, 2 % or more of |L1 - L2| / L_{AVG} will be able to reduce the interference noise by 20 dB or more from the case where |L1 - L2| that is the difference in the resonance frequency is 0. Preferably, 4 % or more of |L1 - L2| / L_{AVG} will be able to further reduce the interference noise.

As stated, in order to reduce the interference noise, it is needed to set | L1 - L2 | / L_{AVG} at 1 % or more. Preferably, 2 % or more, and more preferably, 4 % or more. If |L1 - L2| / L_{AVG} is increased, the difference in the sensitivity between the multiple tuning-fork vibrators will be increased, too. For this reason, |L1 - L2| / L_{AVG} needs to be small enough to allow the difference in the sensitivity of the angular velocity between multiple tuning-fork vibrators 10. However, the allowable level may be different depending on the system in which the angular velocity sensor is used. If the angular velocity sensor includes three or more tuning-fork vibrators 10, the difference in the arm length portion La between the tuning-fork vibrators 10 respectively needs to be 1 % or more of the average L_{AVG} of the lengths of the arm portions. An Example of 1 % or more of |L1 - L2| / L_{AVG} is that the length Lb of the tuning-fork vibrator 10a and the length La of the arm portion are respectively 4.4 mm and 3.1 mm, and the length Lb of the tuning-fork vibrator 10b is 4.2 mm and 2.9 mm.

### (Second Exemplary Embodiment)

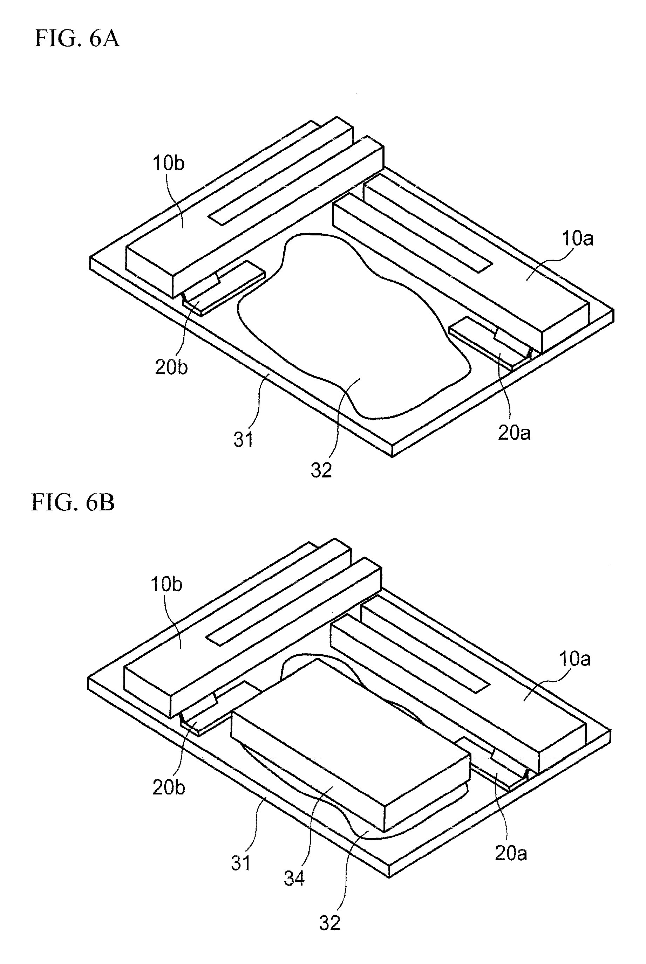

In the angular velocity sensor with 1 % or more of |L1 - L2| / L_{AVG}, there is provided a sound absorbing portion on a printed circuit board 31 serving as a mounting portion, in a second exemplary embodiment. Referring to FIG. 6A and FIG. 6B, two tuning-fork vibrators 10a and 10b perpendicular to each other are respectively mounted through the supporting portions 20a and 20b in the printed circuit board 31. Referring to FIG. 6A, there is provided a sound absorbing member 32 serving as a sound absorbing portion in the printed circuit board 31 so as to absorb vibrations of the tuning-fork vibrator 10a and the tuning-fork vibrator 10b. The sound absorbing member 32 may be made of a soft material for absorbing the vibrations of the printed circuit board 31, and resin such as, for example, epoxy resin, silicon resin, or the like may be employed. Referring to FIG. 6B, there is provided a weight 34 over the sound absorbing member 32, and other configurations are same as those of FIG. 6A. The sound absorbing member 32 also has a function as an adhesive to adhere the weight 34. In FIG. 6B, the weight 34 allows the sound absorbing member 32 to absorb more vibrations of the printed circuit board 31. In accordance with the second exemplary embodiment, the interference noise can be reduced, because the sound absorbing portion absorbs vibrations propagating along the printed circuit board 31 from the tuning-fork vibrator 10a to the tuning-fork vibrator 10b or from the tuning-fork vibrator 10b to the tuning-fork vibrator 10a. Since the sound absorbing portion absorbs the vibration from the tuning-fork vibrator 10a to the tuning-fork vibrator 10b or from the tuning-fork vibrator 10b tuning-fork vibrator to the tuning-fork vibrator 10a, it is preferable that the sound absorbing portion be interposed between the tuning-fork vibrator 10a and the tuning-fork vibrator 10b. Vibrations may be absorbed by partially increasing the thickness of the mounting portion of the printed circuit board 31 or the like to increase the inertia moment and make vibrations from the tuning-fork vibrator 10a or the tuning-fork vibrator 10b difficult to propagate.

### (Third Exemplary Embodiment)

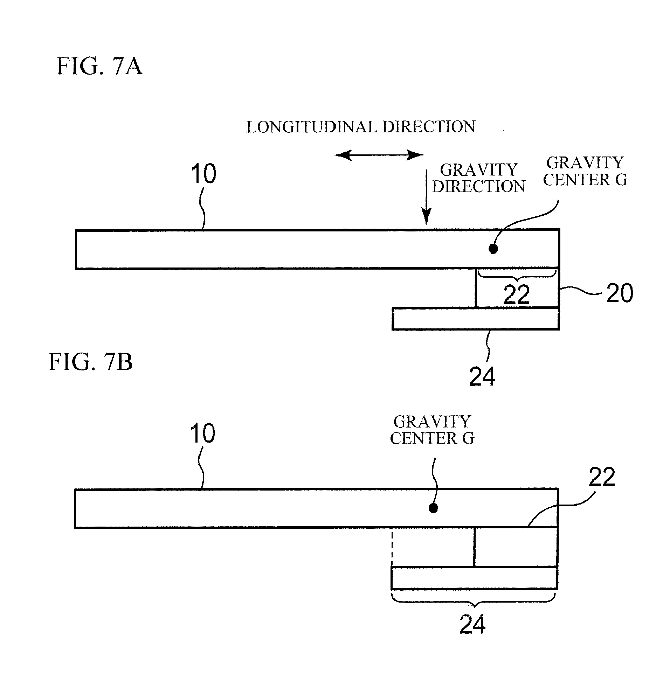

In the angular velocity sensor with 1 % or more of |L1 - L2| / L_{AVG}, the center of gravity of the tuning-fork vibrator 10 is arranged above the supporting portion in a third exemplary embodiment. FIG. 7A and FIG. 7B are views respectively showing projection planes with the gravity center, direction of gravitational force, and longitudinal direction of the tuning-fork vibrator 10. In the third exemplary embodiment, other configurations are the same as those of the first exemplary embodiment and a description will be omitted. Referring to FIG. 7A, a gravity center G is set immediately above a region in which the supporting face 22 of the supporting portion 20 for supporting the tuning-fork vibrator 10 is perpendicularly projected on the projection plane of the supporting face. This allows the tuning-fork vibrator 10 to suppress the oscillating movement, even if a vibration or impact is externally applied for a short period of time. If the tuning-fork vibrator 10 makes an oscillating movement, an unnecessary signal may be output after recognizing wrongly that the rotation was made around the detection axis, although there is no rotation around the detection axis. The angular velocity sensor of FIG. 7A is capable of suppressing the oscillating movement and thereby suppressing the output of any unnecessary signal. In addition, if the angular velocity sensor is used under the environment in which the temperature drastically changes, for example, for use in a vehicle, the bonding member such as an adhesive or the like for firmly fitting the tuning-fork vibrator 10 in the supporting face 22 may, in some cases, change the hardness due to the temperature change and may tilt the tuning-fork vibrator 10 under the softened state. This will vary the sensitivity or offset of the tuning-fork vibrator 10. Even in such a state, by configuring the gravity center G of the tuning-fork vibrator 10 immediately above the supporting face 22, the variation in the sensitivity or offset of the tuning-fork vibrator 10 caused by the temperature change can be suppressed.

Referring to FIG. 7B, the gravity center G is set immediately above a region in which the mounting face 24 for mounting the tuning-fork vibrator 10 is perpendicularly projected on the projection plane of FIG. 7B. This makes it possible to suppress the oscillating movement and suppress the output of an unnecessary signal, in a similar manner to FIG. 7A. It is also possible to suppress the change in the sensitivity or offset of the tuning-fork vibrator 10, caused by the degradation of the bonding member of the mounting face 24 due to the temperature change. Here, at least one of the multiple tuning-fork vibrators 10 may have the gravity center G set immediately above the region in which the supporting face 22 is projected on the projection plane. The configuration employed in the third exemplary embodiment may be employed together with that of the second exemplary embodiment.

### (Fourth Exemplary Embodiment)

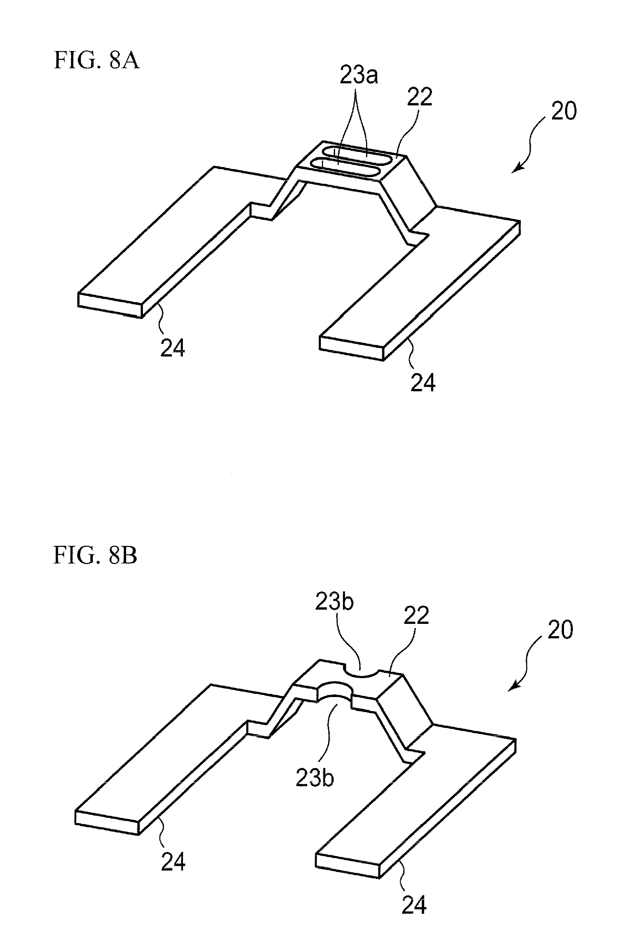

In the angular velocity sensor with 1 % or more of |L1 - L2| / L_{AVG}, the supporting face has a bonding enhancement portion (first bonding enhancement portion) for enhancing the bonding with the tuning-fork vibrator in a fourth exemplary embodiment. FIG. 8A and FIG. 8B are views showing the supporting portions 20 of the angular velocity sensor employed in the fourth exemplary embodiment. Referring to FIG. 8A, the supporting face 22 defines at least one opening or slit 23a protruding through the supporting portion 20. Referring to FIG. 8B, the supporting face 22 defines at least one cutaway 23b. In this manner, the bonding enhancement portion is provided for enhancing the bonding with the tuning-fork vibrator 10. It is possible to increase the surface area of the supporting face 22 with the slit 23a or the cutaway 23b employed in the fourth exemplary embodiment and serving as the bonding enhancement portion, whereby the bonding area with the bonding member such as an adhesive or the like can be enlarged. This allows the tuning-fork vibrator 10 and the supporting portion 20 to be coupled in an enhanced manner by the anchor effect.

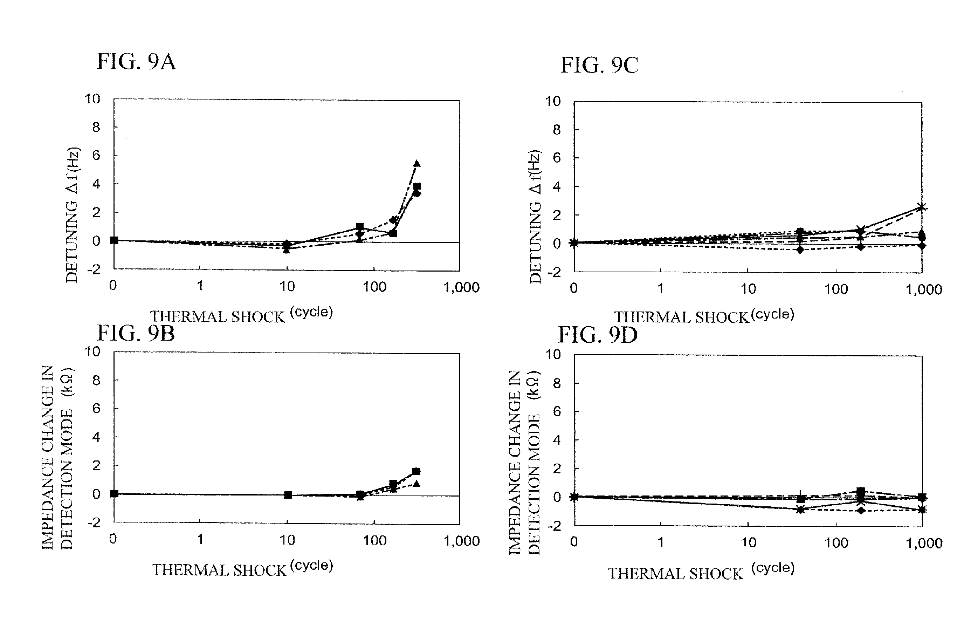

FIG. 9A through FIG. 9D shows improved effects of the enhanced bonding between the tuning-fork vibrator 10 and the supporting portion 20. By use of the angular velocity vibrator employed in the first exemplary embodiment that does not include a bonding enhancement portion the supporting face 22 and that employed in the fourth exemplary embodiment that includes the slit 23a serving as the bonding enhancement portion shown in FIG. 8A in the supporting face 22, the thermal shock test was performed for 30 minutes at -55 °C and 125 °C. FIG. 9A and FIG. 9C are graphs showing the differences in the resonance frequency (detuning Δf) in the drive mode and in the detection mode, prior to and subsequent to the thermal shock test, of multiple angular velocity sensors employed in the first exemplary embodiment and those employed in the fourth exemplary embodiment, with respect to the thermal shock times (cycle). FIG. 9B and FIG. 9D show changes in impedance in the detection mode of the multiple angular velocity sensors employed in the first exemplary embodiment and those employed in the fourth exemplary embodiment, with respect to the number of thermal shock times.

As shown in FIG. 9A, when the number of thermal shock times exceeds 100 in the angular velocity sensor employed in the first exemplary embodiment, the detuning Δf drastically increases. On the other hand, as shown in FIG. 9C, even when the thermal shock tests are performed 1000 times on the angular velocity sensor employed in the fourth exemplary embodiment, the detuning Δf is as high as 2 Hz. Also, as shown in FIG. 9B, when the number of thermal shock times exceeds 100 in the angular velocity sensor employed in the first exemplary embodiment, the impedance drastically changes in the detection mode. On the other hand, as shown in FIG. 9D, even when the thermal shock tests are performed 1000 times on the angular velocity sensor employed in the fourth exemplary embodiment, the impedance hardly changes in the detection mode. For example, as a standard for using an angular velocity sensor in a vehicle, what is needed is that the impedance hardly changes in the detection mode, at the detuning Δf of 5 Hz or less, after the thermal shock tests are performed at least 1000 times, alternatively 3000 times. As shown in FIG. 9A, the angular velocity sensor employed in the first exemplary embodiment does not satisfy the above-described standard. However, the angular velocity sensor employed in the fourth exemplary embodiment is capable of making the detuning Δf at 5 Hz or less after 1000 times of the thermal shock tests, as shown in FIG. 9C. As described, resistance to thermal shock can be enhanced by providing the bonding enhancement portion in the supporting face 22. It is only necessary for at least one supporting face 22 of multiple supporting portions 20 for supporting the tuning-fork vibrator 10 to include the bonding enhancement portion. The configuration employed in the fourth exemplary embodiment may be employed together with that employed in the second or third exemplary embodiment.

### (Fifth Exemplary Embodiment)

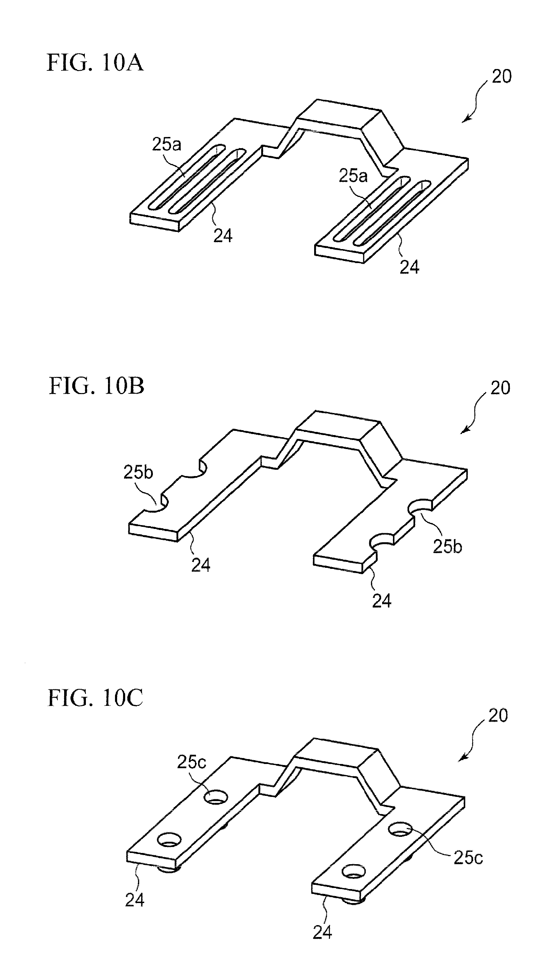

In the angular velocity sensor with 1 % or more of |L1 - L2| / L_{AVG}, the mounting face has a bonding enhancement portion (second bonding enhancement portion) for enhancing the bonding with the mounting portion, in a fifth exemplary embodiment. FIG. 10A through FIG. 10C are views showing the supporting portions 20 of the angular velocity sensor employed in the fifth exemplary embodiment. Other configurations are same as those employed in the first exemplary embodiment. Referring to FIG. 10A, the mounting face 24 defines at least one opening or slit 25a that extends through the supporting portion 20. Referring to FIG. 10B, the mounting face 24 defines at least one cutaway 25b. Referring to FIG. 10C, the mounting face 24 defines at least one pit (projection as viewed from the bottom) 25c. in accordance with the fifth exemplary embodiment, the bonding enhancement portion is provided in the mounting face 24 so as to enhance the bonding with the mounting portion. It is possible to increase the surface area of the mounting face 24 with the slit 25a, the cutaway 25b, or the pit 25c employed in me fifth exemplary embodiment and serving as the bonding enhancement portion, whereby the bonding area with the bonding member such as an adhesive or the like can be enlarged. This allows the package 30 and the supporting portion 20 to be coupled in an enhanced manner by the anchor effect. It is only necessary for at least one of the mounting faces 24 in multiple supporting portions 20 for supporting the tuning-fork vibrator 10. Also, the configuration employed in the fourth exemplary embodiment may be employed together with any one of those employed in the second through fourth exemplary embodiments.

### (Sixth Exemplary Embodiment)

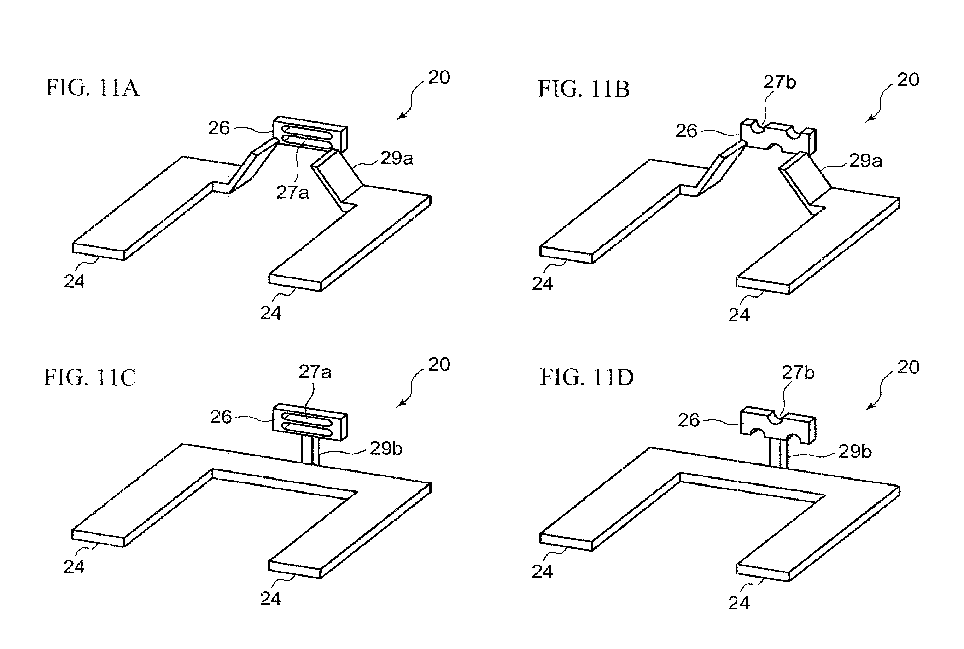

In the angular velocity sensor with 1 % or more of |L1 - L2| / L_{AVG}, there is provided a supporting face 26 that intersects with an in-plane vibration face of the arm portions 11 and 12 of the tuning-fork vibrator 10 and the supporting face 26 has a bonding enhancement portion (first bonding enhancement portion) in a sixth exemplary embodiment. FIG. 11A through FIG. 11D are views showing the supporting portion 20 of the angular velocity sensor in accordance with the sixth exemplary embodiment. Other configurations are same as those employed in the first exemplary embodiment. Referring to FIG. 11A, the supporting face 26 intersects at right angles with the plane of the vibration direction of the in-plane vibration mode (shown in FIG. 4) of the tuning-fork vibrator 10. Also, the supporting face 26 has an opening or slit 27a that extends through the supporting portion 20. The supporting face 26 and the mounting faces 24 are connected by a member 29a. Referring to FIG. 11B, the supporting face 26 defines a cutaway 27b, and other configurations are same as those shown in FIG. 11A. Referring to FIG. 11C, the supporting face 26 and the mounting faces 24 are connected by a member 29b having a different shape from the member 29a, and other configurations are same as those shown in FIG. 11A. Referring to FIG. 11D, the supporting face 26 defines the cutaway 27b, and other configurations are same as those shown in FIG. 11C.

In accordance with the sixth exemplary embodiment, the supporting face 26 intersects at right angles with the in-plane vibration face, which is a plane virtually arranged in a vibration direction of the in-plane vibration mode (vibration mode shown in FIG. 4A) of the arm portions 11 and 12 of the tuning-fork vibrator 10, namely, the plane virtually arranged in the direction of the multiple arm portions 11 and 12. The in-plane vibration face has a large vibration in the in-plane vibration mode shown in FIG. 4A and in the plane-vertical vibration mode shown in FIG. 4B. For this reason, in the first through fifth exemplary embodiments, when the supporting face 22 supports this face, the vibration modes used as a drive mode or a detection mode are suppressed. Meanwhile, the face that virtually intersects at right angles with the in-plane vibration mode has a small vibration in the in-plane vibration mode and in the plane-vertical vibration mode. Accordingly, by supporting the tuning-fork vibrator 10 with the face that virtually intersects at right angles with the in-plane vibration mode, it is possible to suppress the vibration mode as described in the first through fifth exemplary embodiments. It is preferable and it has the largest effect when the supporting face 26 virtually intersects at right angles with the in-plane vibration mode of the tuning-fork vibrator 10 at right angles. However, it is effective when the supporting face 26 intersects with the in-plane vibration mode. In addition, there is provided in the supporting face 26, the bonding enhancement portion (first bonding enhancement portion) for enhancing the bonding with the tuning-fork vibrator 10. This enables the enhanced bonding between the supporting portion 20 and the tuning-fork vibrator 10. Furthermore, the member 29a or the member 29b connecting the supporting face 26 and the mounting face 24 of the supporting portion 20 may have an arbitrary shape. It is only necessary for the supporting face 26, which is at least one of the members in the supporting portion 20 supporting the tuning-fork vibrator 10, to have the bonding enhancement portion. The configuration of the second or third exemplary embodiment may be employed together with that of the sixth exemplary embodiment.

### (Seventh Exemplary Embodiment)

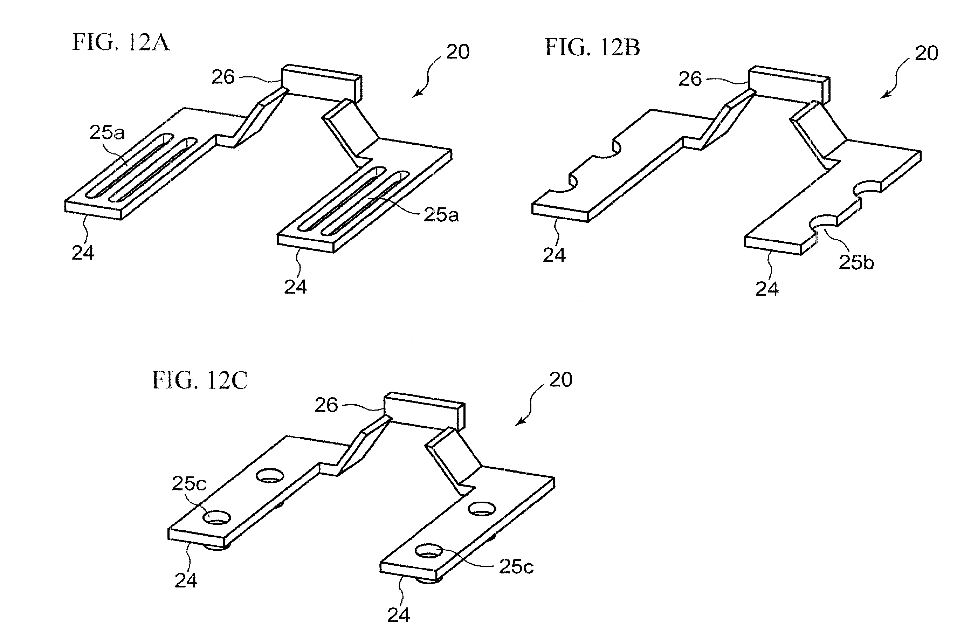

In the angular velocity sensor with 1 % or more of |L1 - L2| / L_{AVG}, there is provided the supporting face 26 that virtually intersects with an in-plane vibration face of the arm portions 11 and 12 of the tuning-fork vibrator 10, the mounting faces 24 having a bonding enhancement portion (second bonding enhancement portion), in a seventh exemplary embodiment. FIG. 12A through FIG. 12C are views showing the supporting portion 20 of the angular velocity sensor in accordance with the seventh exemplary embodiment. Other configurations are same as those employed in the first exemplary embodiment. Referring to FIG. 12A, the supporting face 26 virtually intersects at right angles with the in-plane vibration face of the tuning-fork vibrator 10. Also, the mounting face 24 defines at least one opening or slit 25a that extends through the supporting portion 20. Referring to FIG. 12B, the mounting face 24 defines at least one cutaway 25b. Referring to FIG. 12C, the mounting face 24 has at least one pit 25c (projection as viewed from the bottom).

In accordance with the seventh exemplary embodiment, the supporting face 26 virtually intersects with the in-plane vibration faces of the arm portions and 12 of the tuning-fork vibrator 10, and there is provided the bonding enhancement portion for enhancing the bonding with the tuning-fork vibrator 10. This enables the enhanced bonding between the supporting portion 20 and the tuning-fork vibrator 10. In addition, the member 29a or the member 29b connecting the supporting face 26 and the mounting face 24 may have an arbitrary shape. It is only necessary for the supporting face 26, which is at least one of the members in the supporting portion 20 supporting the tuning-fork vibrator 10, to have the bonding enhancement portion. The configuration of the second, third, or sixth exemplary embodiment may be employed together with that of the sixth exemplary embodiment.

### (Eighth Exemplary Embodiment)

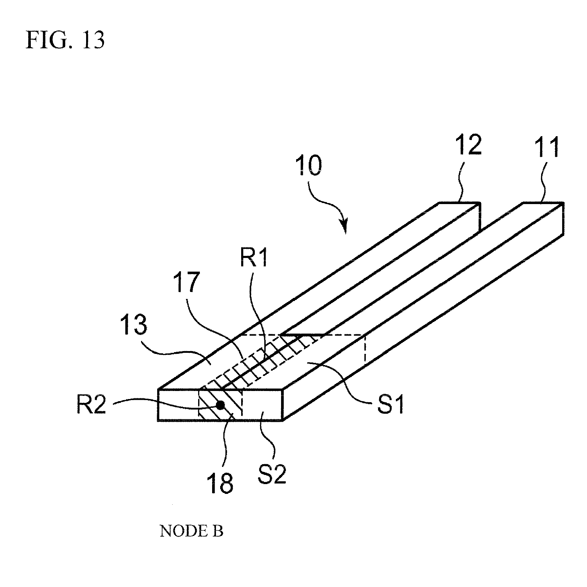

In the angular velocity sensor with 1 % or more of |L1 - L2| / L_{AVG}, the supporting face is provided near the node of the tuning-fork vibrator 10. FIG. 13 is a view explaining the face in contact with the supporting face of the supporting portion 20 in the tuning-fork vibrator 10, through a bonding member. For example, in the vibration mode shown in FIG. 4A and FIG. 4B, the node B is a common node of the node A of FIG. 4A and the node B of FIG. 4B. Referring to FIG. 13, a region R1 (straight line) is a region in which the node B is vertically projected on a bottom face S1 of the base portion 13 in the tuning-fork vibrator 10, and a region R2 (bullet) is a region, in a rear face S2, in which the node B virtually intersects with the rear face S2. In the eight exemplary embodiment, a region 17 that is a portion of the bottom face S1 including the region R1 or a region 18 that is a portion of the rear face S2 including the region R2 is supported by the supporting face.

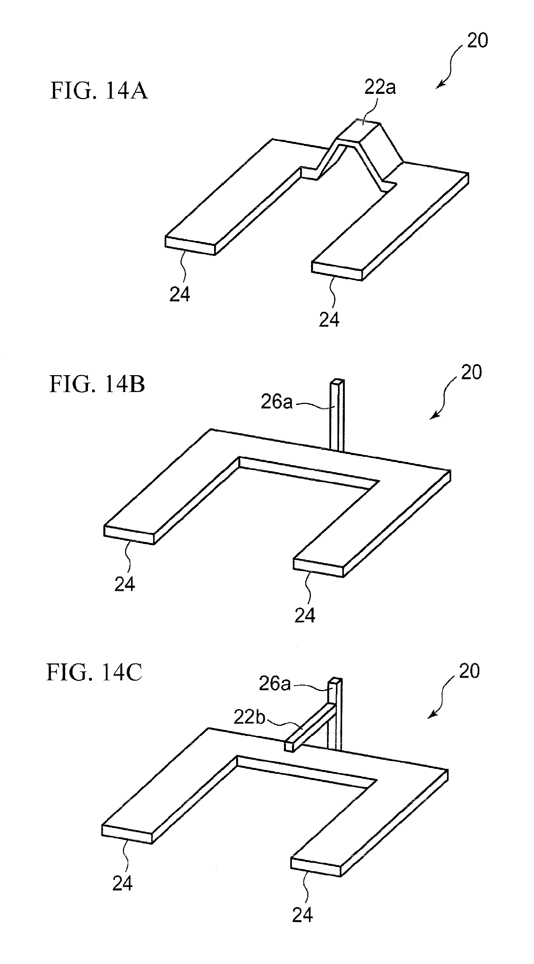

FIG. 14A through FIG. 14C are views showing the supporting portion 20 of the angular velocity sensor employed in the eighth exemplary embodiment. Other configurations are same as those employed in the first exemplary embodiment. Referring to FIG. 14A, a supporting face 22a supports the region 17, which is a portion of the bottom face S1 of the base portion 13. Referring to FIG. 14B, a supporting face 26a supports the region 18, which is a portion of the rear face S2 of the base portion 13. Referring to FIG. 14C, a supporting face 22b and the supporting face 26a respectively support the region 17 and the region 18.

In accordance with the eighth exemplary embodiment, the tuning-fork vibrator 10 is supported at the supporting faces 22a, 22b, or 26a supporting the region 17 or the region 18, which is a portion of the face S1 or the face S2 respectively including the region R1 or R2, on which the node of the tuning-fork vibrator 10 is projected on at least one of the faces, namely, the face S1 and the face S2 of the base portion 13. The node B is a region in which the tuning-fork vibrator 10 does not vibrate. Therefore, vibration is small in the region closest to the node B out of the face S1 or the face S2 of the base portion 13, in other words, the region R1 or the region R2 on which the node B is vertically projected on the face S1 or the face S2 is small in vibration. Preferably, the tuning-fork vibrator 10 is supported by a portion of the supporting face including the region R1 or the region R2. This reduces the stress applied to the supporting face and suppresses detachment the supporting face from the tuning-fork vibrator 10. In the eighth exemplary embodiment, the proximity of the node B common to both the node A in the drive mode and the node B in the detection mode is supported by the supporting face. However, the proximity of the node in the drive mode and that of the detection mode may be supported by the supporting face. In addition, it is only necessary to apply the present exemplary embodiment to at least one of the multiple tuning-fork vibrators 10. Furthermore, any of the configurations employed in the second through seventh exemplary embodiments may be employed together with that of the eighth exemplary embodiment.

As a mounting portion, the package 30 is employed in the first exemplary embodiment, and the printed circuit board 31 is employed in the second exemplary embodiment. However, if the mounting portion has a function of mounting the tuning-fork vibrator 10a and the tuning-fork vibrator 10b, another configuration thereof may be applied. The tuning-fork vibrator 10a and the tuning-fork vibrator 10b respectively have two arm portions 11 and 12 in the above-described exemplary embodiments. However, the tuning-fork vibrator has three or more arm portions. The supporting portion 20 is not limited to the shapes described in the first through eighth exemplary embodiments, and it is only necessary for the supporting portion 20 to include the supporting face 22 supporting the tuning-fork vibrator 10 and the mounting faces 24 to be mounted on the mounting portion. In the above-described exemplary embodiments, two vibrators are employed; however, three or more vibrators may be applied.

Although a few specific exemplary embodiments employed in the present invention have been shown and described, it would be appreciated by those skilled in the art that changes may be made in these exemplary embodiments without departing from the principles and spirit of the invention, the scope of which is defined in the claims and their equivalents.

The present invention is based on Japanese Patent Application No. 2006-116001 filed on April 19, 2006, the entire disclosure of which is hereby incorporated by reference.

## Claims

1. An angular velocity sensor comprising multiple tuning-fork vibrators, each of which respectively includes a base portion and multiple arm portions extending from the base portion,
wherein a difference in length of the arm portions between the multiple tuning-fork vibrators is at least 1 percent of an average of lengths of the multiple arm portions of the multiple tuning-fork vibrators.

2. The angular velocity sensor as claimed in claim 1, further comprising:
multiple supporting portions respectively supporting the multiple tuning-fork vibrators; and
a mounting portion mounting the multiple supporting portions.

3. The angular velocity sensor as claimed in claim 2, further comprising a sound absorbing portion absorbing vibrations of the multiple tuning-fork vibrators provided in the mounting portion.

4. The angular velocity sensor as claimed in claim 2, wherein in at least one of the multiple tuning-fork vibrators, a gravity center thereof is located immediately above a first region in which a supporting face of a corresponding supporting portion supporting a tuning-fork vibrator is projected on a projection plane that includes the gravity center of the tuning-fork vibrator, a direction of gravitational force, and a longitudinal direction of the tuning-fork vibrator, or is located immediately above a second region in which a mounting face to be mounted on the mounting portion of the corresponding supporting portion is projected on the projection plane.

5. The angular velocity sensor as claimed in claim 2, wherein at least one of the multiple supporting portions includes a first bonding enhancement portion far enhancing bonding between the at least one of the multiple supporting portions and the corresponding tuning-fork vibrator, in a supporting face supporting the corresponding tuning-fork vibrator.

6. The angular velocity sensor as claimed in claim 2, wherein at least one of the multiple supporting portions includes a second bonding enhancement portion for enhancing bonding between the at least one of the multiple supporting portions and the mounting portion, in the mounting face to be mounted on the mounting portion.

7. The angular velocity sensor as claimed in claim 2, wherein at least one of the multiple supporting portions includes a supporting face virtually intersecting with an in-plane vibration face of an arm portion of the tuning-fork vibrator and supporting the corresponding tuning-fork vibrator.

8. The angular velocity sensor as claimed in claim 7, wherein at least one of the multiple supporting portions includes a first bonding enhancement portion for enhancing bonding between the at least one of the multiple supporting portions and the corresponding tuning-fork vibrator, in the supporting face.

9. The angular velocity sensor as claimed in claim 7, wherein at least one of the multiple supporting portions includes a second bonding enhancement portion for enhancing bonding between the at least one of the multiple supporting portions and the mounting portion, in the mounting face to be mounted on the mounting portion.

10. The angular velocity sensor as claimed in claim 1, wherein at least one of the multiple supporting portions supports a corresponding tuning-fork vibrator with a supporting face including a region in which a node of a corresponding tuning-fork vibrator is projected on at least one plane of the corresponding base portion and supporting a portion of the at least one plane.
